# EUROPEAN PATENT APPLICATION

(11) **EP 4 503 571 A1**
(43) Date of publication of application: **05.02.2025**
(21) Application number: 23829735.2
(22) Date of filing: 12.05.2023
(51) Int. Cl.: H04L 61/5007

(54) **ADDRESS CONFIGURATION METHOD AND ELECTRONIC DEVICE**

(30) Priority: 01.07.2022 CN 202210767803
(71) Applicant: Honor Device Co., Ltd., Shenzhen, Guangdong 518040 (CN)
(72) Inventor: ZHANG, Guanghua, Shenzhen, Guangdong 518040 (CN); LI, Jin, Shenzhen, Guangdong 518040 (CN)
(74) Representative: Isarpatent
(86) International application number: PCT/CN2023/093740
(87) International publication number: WO 2024/001549

(57) **Abstract**

This application provides an address configuration method and an electronic device, and relates to the field of terminal technologies. In the address configuration method, when an optical modem does not allocate an address prefix of an IPv6 address of a terminal device to a router, the router may further generate the address prefix of the IPv6 address of the terminal device based on first information. Further, the router may send the address prefix of the IPv6 address of the terminal device to the terminal device. The terminal device may generate the IPv6 address of the terminal device based on the address prefix of the IPv6 address of the terminal device and a physical address of the terminal device. In this way, the terminal device can still generate the IPv6 address of the terminal device even if the optical modem does not allocate the address prefix of the IPv6 address of the terminal device to the router. Further, the terminal device can normally access the Internet based on the IPv6 address of the terminal device.

## Description

This application claims priority to Chinese Patent Application No. 202210767803.4, filed with the China National Intellectual Property Administration on July 1, 2022 and entitled "ADDRESS CONFIGURATION METHOD AND ELECTRONIC DEVICE", which is incorporated herein by reference in its entirety.

### TECHNICAL FIELD

This application relates to the field of terminal technologies, and in particular, to an address configuration method and an electronic device.

### BACKGROUND

A terminal device, a router, and an optical modem may be sequentially communicatively connected to form a network topology structure. The optical modem and the router may forward data from a wide area network to a terminal device connected to the router (such as a notebook computer, a mobile phone, and a tablet computer).

In the Internet Protocol Version 6 (Internet Protocol Version 6. IPv6) Internet access environment, an IPv6 address range is rich. Therefore, the terminal device can communicate with the wide area network via the router and the optical modem only when being configured with an IPv6 address.

However, some operators use the optical modem as a device with a last-level routing function. In this case, in a network topology structure formed by an optical modem, a router in a routing mode, and a terminal device, the terminal device does not configure an IPv6 address of the terminal device. In this way, the terminal device in a local area network cannot communicate with the wide area network via the optical modem and the router in the routing mode.

### SUMMARY

This application provides an address configuration method and an electronic device, so as to alleviate a problem that a terminal device cannot communicate with a wide area network in a network topology structure formed by an optical modem, a router in a routing mode, and a terminal device.

According to a first aspect, this application provides an address configuration method, including: A router obtains first information from an optical modem, where the first information is information used to generate an IPv6 address of the router. The router configures the IPv6 address of the router based on the first information. The router obtains an IPv6 address prefix of a terminal device based on the first information, where an address prefix of an IPv6 address of the terminal device is the same as an address prefix of the IPv6 address of the router. The router sends the address prefix of the terminal device to the terminal device. The terminal device configures the IPv6 address of the terminal device based on the address prefix of the terminal device.

According to the address configuration method provided in the first aspect of this application, when an optical modem does not allocate an address prefix of an IPv6 address of a terminal device to a router, the router may further generate the address prefix of the IPv6 address of the terminal device based on first information. Further, the router may send the address prefix of the IPv6 address of the terminal device to the terminal device. The terminal device may generate the IPv6 address of the terminal device based on the address prefix of the IPv6 address of the terminal device and a physical address of the terminal device. In this way, the terminal device can still generate the IPv6 address of the terminal device even if the optical modem does not allocate the address prefix of the IPv6 address of the terminal device to the router. Further, the terminal device can normally access the Internet based on the IPv6 address of the terminal device.

In an optional implementation, the first information is carried in an RA packet sent by the optical modem in response to an RS packet of the router. That the router configures the IPv6 address of the router based on the first information includes: When obtaining the first information, the router extracts, from the first information, a first address prefix and a first flag used to indicate whether to configure a stateless IP address. When the first flag is used to indicate to configure a stateless IP address, the router generates a first IPv6 address based on the first address prefix and a physical address of the router, where the first IPv6 address is an IPv6 address of the router. The router configures the first IPv6 address.

In this way, the router may generate the first IPv6 address by using the first address prefix in the first information and the first flag that is in the first information and that is used to indicate whether to configure a stateless IP address.

In an optional implementation, that the router obtains an IPv6 address prefix of a terminal device based on the first information includes: The router copies the first address prefix when the first information includes the first address prefix, where the first address prefix is reused as the address prefix of the terminal device.

In this way, the router may copy the first address prefix, and reuse the first address prefix as the address prefix of the terminal device.

In an optional implementation, the first information is carried in an RA packet sent by the optical modem in response to an RS packet of the router. That the router configures the IPv6 address of the router based on the first information includes: When obtaining the first information, the router extracts a second flag from the first information, where the second flag is used to indicate whether to configure a stateful IP address. When the second flag is used to indicate to configure a stateful IP address, the router obtains a second IPv6 address from the optical modem based on DHCPv6, where the second IPv6 address is an IPv6 address of the router. The router configures the second IPv6 address.

In this way, the router may obtain the second IPv6 address from the optical modem based on DHCPv6 by using the second flag in the first information.

In an optional implementation, that a router obtains first information from an optical modem includes: The router sends an RS packet to the optical modem. When the router determines that no RA packet from the optical modem is received, the router obtains the first information from the optical modem based on DHCPv6, where the first information includes a second IPv6 address, and the second IPv6 address is an IPv6 address of the router. That the router configures the IPv6 address of the router based on the first information includes: The router configures the second IPv6 address.

In this way, when the router does not receive the RA packet of the optical modem, the router may also obtain the second IPv6 address from the optical modem based on DHCPv6.

In an optional implementation, that the router obtains an IPv6 address prefix of a terminal device based on the first information includes: The router copies a second address prefix from the second IPv6 address obtained based on the first information, where the second address prefix is reused as the address prefix of the terminal device.

In this way, the router may copy the second address prefix, and reuse the second address prefix as the address prefix of the terminal device.

In an optional implementation, after the terminal device configures the IPv6 address of the terminal device based on the address prefix of the terminal device, the method further includes: The router receives the IPv6 address of the terminal device from the terminal device. The router configures a second routing entry based on the IPv6 address of the terminal device, where the second routing entry includes a mapping relationship between the IPv6 address of the terminal device and a network port on a local area network side of the router.

The address prefix of the IPv6 address of the router is the same as the address prefix of the IPv6 address of the terminal device. To prevent occurrence of disorder in a case of determining a network port for receiving and sending a message when the router determines to receive and send information, thereby causing a failure of receiving and sending a message, the router no longer establishes a mapping relationship (that is, no longer uses a first routing entry) between each address prefix and each network port, but establishes a mapping relationship (that is, uses the second routing entry) between an IPv6 address of each device and each network port, so that the router can accurately determine a network port used for receiving and sending information.

According to a second aspect, an embodiment of this application further provides another address configuration method, including:

An optical modem receives an RS packet of a router, where the RS packet is used to request first information, the first information includes information used to generate an IPv6 address of the router, and the first information includes a first address prefix and a first flag used to indicate whether to configure a stateless IP address. When the optical modem does not store an authorized prefix flag, the optical modem generates the authorized prefix flag based on the first address prefix, where the authorized prefix flag is associated with an IPv6 address of a terminal device. The optical modem sends the first information to the router. When the first flag is used to indicate to configure a stateless IP address, the router generates a first IPv6 address based on the first address prefix and a physical address of the router, where the first IPv6 address is an IPv6 address of the router. The router obtains the authorized prefix flag from the optical modem. The router extracts the first address prefix from the authorized prefix flag. The router sends the first address prefix to the terminal device. The terminal device configures the IPv6 address of the terminal device based on the first address prefix.

According to the address configuration method provided in the second aspect of this application, when an authorized prefix flag that carries the address prefix of the IPv6 address of the terminal device is not configured for the optical modem, the authorized prefix flag that carries the address prefix (the first address prefix) of the IPv6 address of the terminal device may be generated. In this way, the router obtains the authorized prefix flag from the optical modem. The router extracts the first address prefix from the authorized prefix flag. The router sends the first address prefix to the terminal device. The terminal device configures the IPv6 address of the terminal device based on the first address prefix. In this way, the terminal device can still generate the IPv6 address of the terminal device even if the optical modem is not configured with the authorized prefix flag that carries the address prefix of the IPv6 address of the terminal device. Further, the terminal device can normally access the Internet based on the IPv6 address of the terminal device.

In an optional implementation, that the router obtains the authorized prefix flag from the optical modem based on DHCPv6 includes: The router extracts, from the first information, a second flag used to indicate whether to configure a stateful IP address. When the second flag is used to indicate to configure a stateful IP address, the router obtains a second IPv6 address and the authorized prefix flag from the optical modem based on DHCPv6, where the second IPv6 address is an IPv6 address of the router.

In an optional implementation, that the router obtains the authorized prefix flag from the optical modem based on DHCPv6 includes: The router extracts, from the first information, a second flag used to indicate whether to configure a stateful IP address. When the second flag is used to indicate that no stateful IP address is configured, the router extracts, from the first information, a third flag used to indicate whether to obtain another parameter different from a stateful IP address by using DHCPv6. When the third flag is used to indicate to obtain another parameter different from the stateful IP address by using DHCPv6, the router obtains the authorized prefix flag from the optical modem based on DHCPv6.

In an optional implementation, after the terminal device configures the IPv6 address of the terminal device based on the first address prefix, the method further includes: The router receives the IPv6 address of the terminal device from the terminal device. The router configures a second routing entry based on the IPv6 address of the terminal device, where the second routing entry includes a mapping relationship between the IPv6 address of the terminal device and a network port on a local area network side of the router.

An address prefix of the IPv6 address of the router is the same as the address prefix of the IPv6 address of the terminal device. To prevent occurrence of disorder in a case of determining a network port for receiving and sending a message when the router determines to receive and send information, thereby causing a failure of receiving and sending a message, the router no longer establishes a mapping relationship (that is, no longer uses a first routing entry) between each address prefix and each network port, but establishes a mapping relationship (that is, uses the second routing entry) between an IPv6 address of each device and each network port, so that the router can accurately determine a network port used for receiving and sending information.

According to a third aspect, this application further provides an electronic device, including a memory, a processor, and a computer program that is stored in the memory and that can run on the processor. When the processor executes the computer program, the electronic device is enabled to perform the method performed by the router in the first aspect, or the method performed by the optical modem in the first aspect.

According to a fourth aspect, this application further provides a computer-readable storage medium. The computer-readable storage medium stores a computer program. When the computer program is executed by a processor, a computer is enabled to perform the method performed by the router in the first aspect, or the method performed by the optical modem provided in the second aspect.

According to a fifth aspect, this application further provides a computer program product, including a computer program. When the computer program is run, a computer is enabled to perform the method performed by the router in the first aspect, or the method performed by the optical modem provided in the second aspect.

It should be understood that the technical solutions of the second aspect to the fifth aspect of this application correspond to the technical solutions of the first aspect of this application, and beneficial effects achieved by the aspects and corresponding feasible implementations are similar. Details are not described herein again.

### BRIEF DESCRIPTION OF DRAWINGS

FIG. 1 is a schematic diagram of a network topology structure formed by a terminal device, a router, and an optical modem according to an embodiment of this application;
FIG. 2 is a block diagram of a circuit connection of a router according to an embodiment of this application;
FIG. 3A and FIG. 3B are a first flowchart of an address configuration method according to an embodiment of this application;
FIG. 4 is a first flowchart of a specific implementation of S304 in FIG. 3A;
FIG. 5 is a schematic interface diagram of a first interface according to an embodiment of this application;
FIG. 6 is a second flowchart of a specific implementation of S304 in FIG. 3A;
FIG. 7 is a first schematic interaction diagram of a mobile phone during Internet access according to an embodiment of this application;
FIG. 8 is a schematic interface diagram of a second interface according to an embodiment of this application;
FIG. 9 is a second schematic interaction diagram of a mobile phone during Internet access according to an embodiment of this application;
FIG. 10A and FIG. 10B are a second flowchart of an address configuration method according to an embodiment of this application;
FIG. 11 is a schematic diagram of a hardware structure of an electronic device according to an embodiment of this application; and
FIG. 12 is a schematic diagram of a structure of a chip according to an embodiment of this application.

### DESCRIPTION OF EMBODIMENTS

To clearly describe the technical solutions in the embodiments of this application, in the embodiments of this application, words such as "first" and "second" are used to distinguish between same items or similar items with basically the same functions and effects. For example, a first value and a second value are merely intended to distinguish between different values, but not to limit a sequence thereof. A person skilled in the art may understand that the words such as "first" and "second" do not limit a quantity and an execution sequence, and the words such as "first" and "second" do not indicate a definite difference.

It should be noted that in this application, the word such as "example" or "for example" is used to represent giving an example, an illustration, or a description. Any embodiment or design solution described as an "example" or "for example" in this application should not be explained as being more preferred or having more advantages than other embodiments or design solutions. Exactly, the word such as "example" or "for example" is used to present related concepts in a specific manner.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects. "At least one of the following items" or a similar expression thereof means any combination of these items, including a single item or any combination of a plurality of items. For example, at least one of a, b, or c may represent a, b, c, a and b, a and c, b and c, or a, b, and c, where a, b, and c may be singular or plural.

A terminal device, a router, and an optical modem may be sequentially communicatively connected to form a network topology structure. The terminal device may access a wide area network by using the optical modem and the router. In the Internet Protocol Version 6 (Internet Protocol Version 6, IPv6) Internet access environment, an IPv6 address range is rich. Therefore, the terminal device can communicate with the wide area network via the router and the optical modem only when being configured with a global IPv6 address.

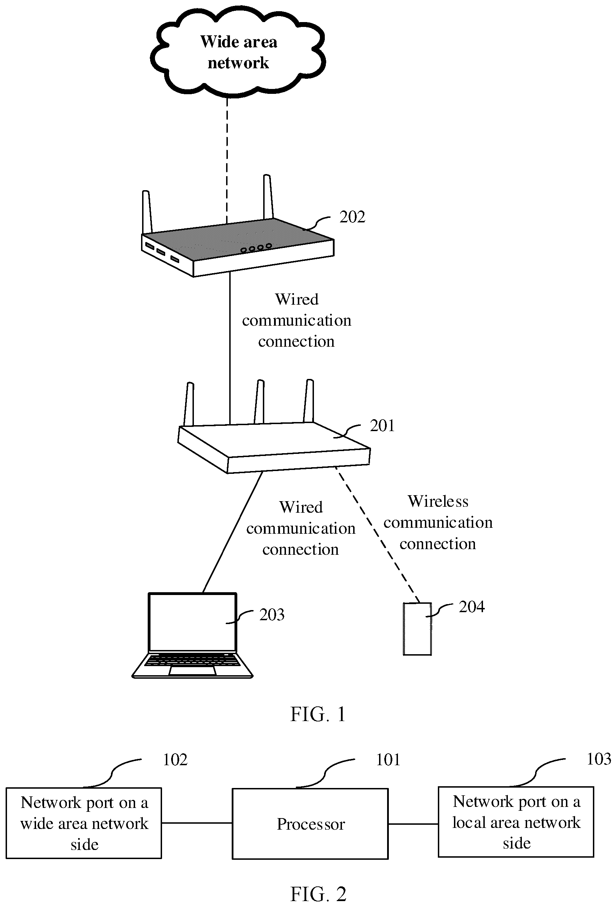

For example, as shown in FIG. 1, the router establishes a wired communication connection to the optical modem. The router obtains a first address prefix from the optical modem, and the router generates an IPv6 address of the router based on the first address prefix. However, some operators use the optical modem as a device with a last-level routing function. In this case, after a user establishes a communication connection between the optical modem and the router in a routing mode, the optical modem sends, only to a next-level device of the optical modem (that is, the router in the routing mode), an address prefix used to generate the IPv6 address of the router; and does not send an address prefix used to generate an IPv6 address of the terminal device to a next-next-level device (that is, the terminal device) of the optical modem. Further, after the terminal device establishes a communication connection to the router in the routing mode, the IPv6 address of the terminal device is not generated and configured on the terminal device. In this way, the terminal device in a local area network cannot communicate with the wide area network via the optical modem and the router in the routing mode.

In this way, still as shown in FIG. 1, when a notebook computer establishes a communication connection to the router, the notebook computer sends a first solicitation to the router, and the first solicitation is used to request an address prefix. Because the router does not obtain the address prefix used to generate IPv6 of the terminal device, after receiving the first solicitation, the router cannot deliver, to the notebook computer, the address prefix used to generate IPv6 of the terminal device. In this way, no IPv6 address is configured for the notebook computer. As a result, the notebook computer in the local area network cannot communicate with the wide area network via the router and the optical modem.

Similarly, when the mobile phone establishes a communication connection to the router, the mobile phone sends a first solicitation to the router, where the first solicitation is used to request an address prefix. Because the router does not obtain the address prefix used to generate IPv6 of the terminal device, after receiving the first solicitation, the router cannot deliver, to the mobile phone, the address prefix used to generate IPv6 of the terminal device. In this way, no IPv6 address is configured for the mobile phone. As a result, the mobile phone in the local area network cannot communicate with the wide area network via the router and the optical modem.

In view of this, this application provides a router to obtain first information from an optical modem, where the first information is information used to generate an IPv6 address of the router. The router configures the IPv6 address of the router based on the first information. The router obtains an IPv6 address prefix of a terminal device based on the first information, where an address prefix of an IPv6 address of the terminal device is the same as an address prefix of the IPv6 address of the router. The router sends the address prefix of the terminal device to the terminal device. The terminal device configures the IPv6 address of the terminal device based on the address prefix of the terminal device.

In this way, when an optical modem does not allocate an address prefix of an IPv6 address of a terminal device to a router, the router may further generate the address prefix of the IPv6 address of the terminal device based on first information. Further, the router may send the address prefix of the IPv6 address of the terminal device to the terminal device. The terminal device may generate the IPv6 address of the terminal device based on the address prefix of the IPv6 address of the terminal device and a physical address of the terminal device. In this way, the terminal device can still generate the IPv6 address of the terminal device even if the optical modem does not allocate the address prefix of the IPv6 address of the terminal device to the router. Further, the terminal device can normally access the Internet based on the IPv6 address of the terminal device.

### Explanation of terms in this application:

Optical modem: The optical modem is a device similar to a baseband digital modem. Unlike the baseband digital modem, the optical modem is connected to a dedicated optical line, that is, an optical signal. The optical modem is used for conversion of optical and electrical signals and conversion of an interface protocol in a wide area network, and is used to connect to a router.

Router: is a hardware device that connects two or more networks and is a dedicated intelligent network device that reads an address in each data packet and then determines how to transfer the address.

IPv6: Internet Protocol Version 6 (Internet Protocol Version 6, IPv6), IPv6 is an Internet Engineering Task Force-designed next-generation IP protocol that is used for replacing IPv4 and has rich address resources.

IPv6 address: The IPv6 address contains 128 bits in total, the first n bits are an address prefix, 63-n bits are a subnet ID, and the last 64 bits are an interface address. The interface address is not usually used for address planning and allocation.

Address prefix: is the first n-bit data of a network address.

DHCPv6: Dynamic Host Configuration Protocol Version 6 (Dynamic Host Configuration Protocol Version 6, DHCPv6). It is a network protocol used to configure an IP address, an IP prefix and/or another configuration required by an IPv6 host working on an IPv6 network.

iapd information: authorized prefix flag (Identity Association for Prefix Delegation, iapd). The iapd information is usually delivered by an optical modem to a router based on DHCPv6 in response to a solicitation after the router sends the solicitation to the optical modem based on DHCPv6.

Domain name address: is an Internet address represented in a form of a host, a subdomain, and a domain, and is corresponding to an IP address represented by a number. The domain name address is also referred to as a fully qualified domain name.

Neighbor Discovery Protocol (Neighbor Discovery Protocol, NDP or ND): is a part of a TCP/IP protocol stack and is mainly used with IPv6. The Neighbor Discovery Protocol works at a network layer and is responsible for discovering another node and a corresponding address on a link, determining an available route, and maintaining information reachability about an available path and another active node.

As shown in FIG. 1, the address configuration method provided in the embodiment of this application may be applied to a communication system formed by the router, the optical modem, and the terminal device.

As shown in FIG. 2, a router includes a processor 101 and a network port. The processor 101 is electrically connected to the network port. The network port includes a network port 101 on a wide area network side and a network port 103 on a local area network side. The network port 101 on the wide area network side may communicate and interact with a device such as an optical modem 202 or a server in a wide area network. The network port 103 on the local area network side may communicate and interact with a terminal device. It can be learned that both the network port 101 on the wide area network side and the network port 103 on the local area network side are network ports used to send and receive information.

In a possible implementation, the processor 101 may be integrated into an SOC (System on Chip) chip, and the SOC chip has characteristics of a high processing speed and high efficiency. In this way, a network speed of accessing the Internet by the terminal device by using the router 201 can be high.

In addition, the terminal device may be a mobile phone (mobile phone), a notebook computer, a smart TV, a wearable device, a tablet computer (Pad), a computer with a wireless transceiver function, a virtual reality (virtual reality, VR) terminal device, an augmented reality (augmented reality, AR) terminal device, a wireless terminal in a smart home (smart home), or the like. A specific technology and a specific device form that are used by the terminal device are not limited in embodiments of this application.

The following describes, in detail in combination with specific embodiments, the technical solutions of this application and how the foregoing technical problems are resolved by using the technical solutions of this application. The following several specific embodiments may be implemented independently, or may be combined with each other. For same or similar concepts or processes, details may not be described in some embodiments.

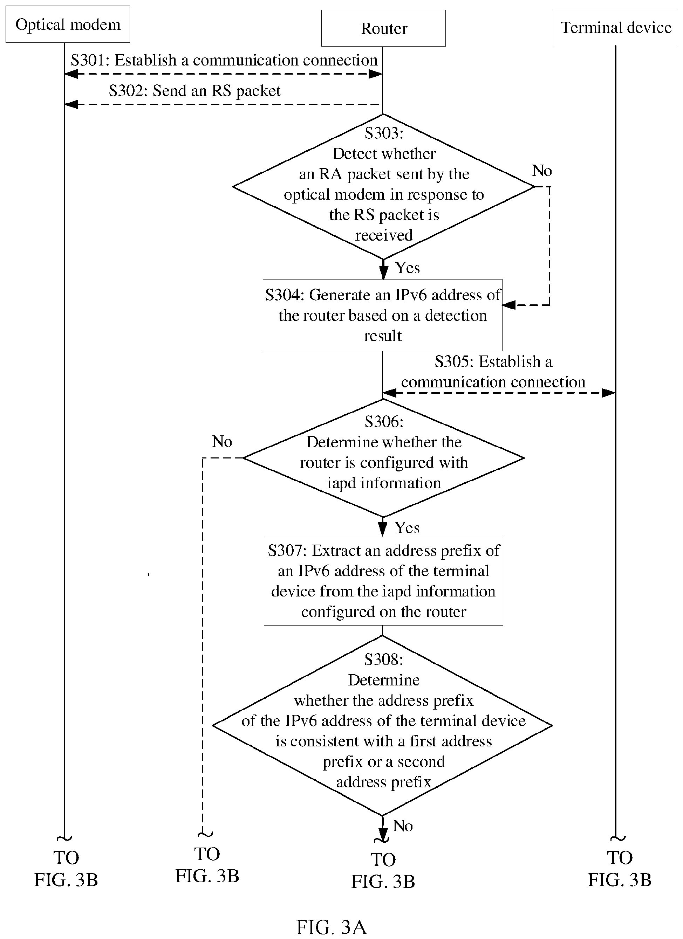

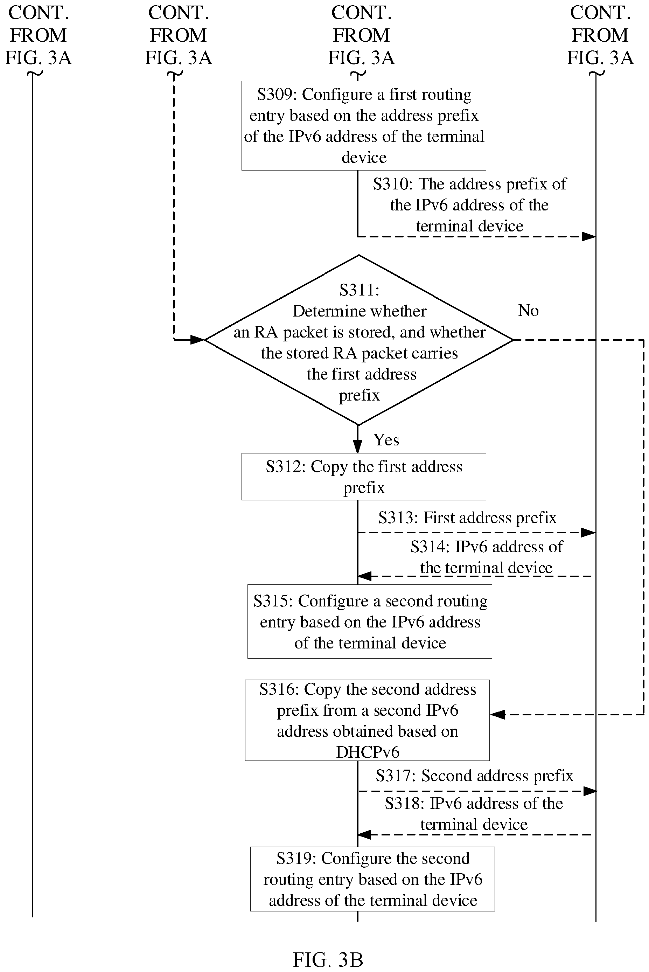

As shown in FIG. 3A and FIG. 3B, an address configuration method provided in an embodiment of this application includes:
S301: A router 201 establishes a communication connection to an optical modem 202.

For example, as shown in FIG. 3A and FIG. 3B, the communication connection may be established between the router 201 and the optical modem 202 by using a network cable. It should be noted that, in this embodiment, the router is in a routing mode.

S302: The router 201 sends a router solicitation RS (Router Solicitation) packet (that is, a first solicitation) to the optical modem 202. The RS packet is used to request first information, and the first information includes information used to generate an IPv6 address of the router 201.

S303: The router 201 detects whether a router advertisement (Router Advertisement, RA) packet sent by the optical modem 202 in response to the RS packet is received. The RA packet carries the first information.

For example, the first information may include a first address prefix, an autonomous flag (that is, Autonomous flag, A flag for short), a managed flag (that is, Managed flag, M flag), and other flag (that is, Other flag, O flag for short). Respective meanings of A flag, M flag, and O flag may be shown in the following Table 1. Certainly, the first information may not include at least one of the first address prefix, A flag, M flag, and O flag.

**Table 1**

| Flag | Meaning | Meaning in a case of value = "1" or "on" | Meaning in a case of value = "0" or "off" |
|---|---|---|---|
| A flag | Indicates whether to configure a stateless IP address. In an RA packet, there may be a plurality of first address prefixes. For example, the plurality of first address prefixes may include: 2401::/64, 2402::/64, and 2403::/64, and each first address prefix may be independently configured with A flag. | Indicates that the router 201 should generate the IPv6 address of the router 201 based on the plurality of first address prefixes, and configure a subnet routing entry and an IPv6 address of the optical modem 202. | Indicates that the router 201 should not generate the IPv6 address of the router 201 based on the plurality of first address prefixes, but may configure a subnet routing entry and an IPv6 address of the optical modem 202. |
| M flag | Indicates whether to configure a stateful IP address (such as DHCPv6). | The router 201 may obtain the IPv6 address and another parameter (such as a domain name address) of the router 201 by using DHCPv6. | Indicates that the router 201 cannot obtain the IPv6 address of the router 201 by using DHCPv6. |
| O flag | Indicates whether to obtain another parameter (such as a DNS list) different from a stateful IP address by using DHCPv6. One RA packet has only one O flag. It should be noted that only when the value of M flag is "off" or "0", | When the value of M flag is "0" or "off" and a value of at least one A flag is "1" or "on", another parameter different from a stateful IP | When the value of M flag is "on" or "1", another parameter different from a stateful IP address will still be obtained by using DHCPv6. |
| | another parameter different from a stateful IP address is obtained. | address will be obtained by using DHCPv6. | When the value of M flag is also "0" or "off", another parameter different from a stateful IP address will not be obtained by using DHCPv6. |

S304: The router 201 generates the IPv6 address of the router 201 based on a detection result.

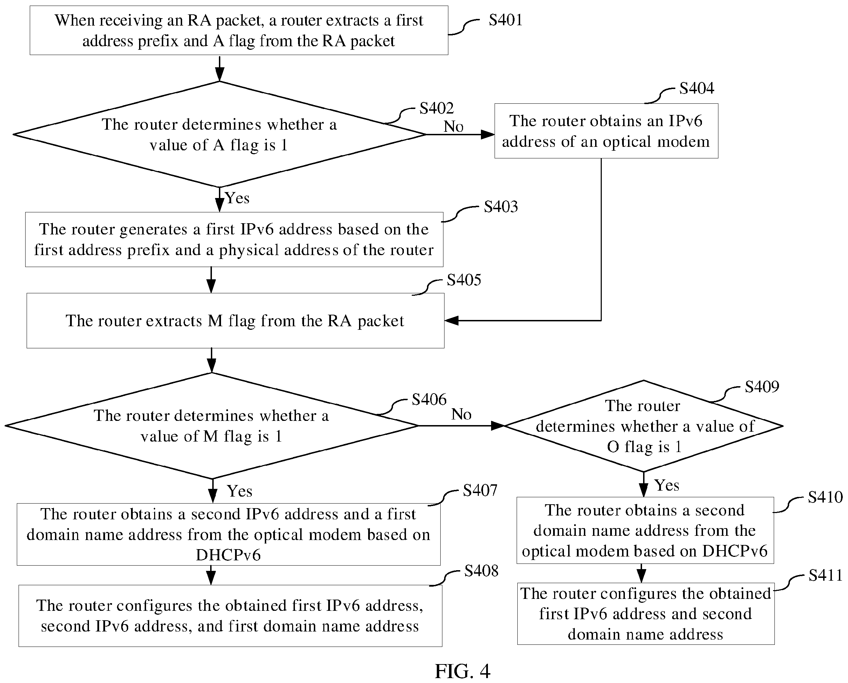

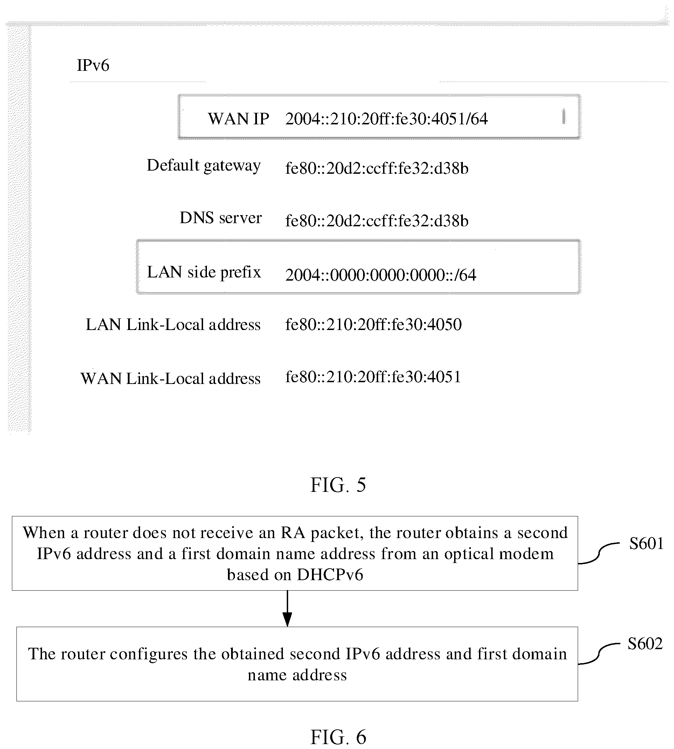

With reference to FIG. 4 and FIG. 6, the following describes two specific implementation procedures of S304.

As shown in FIG. 4, one implementation procedure of S304 may be:
S401: When receiving the RA packet, the router 201 extracts the first address prefix and A flag from the RA packet.
S402: The router 201 determines whether the value of A flag is 1, and if yes, performs S403, or if no, performs S404.
S403: The router 201 generates a first IPv6 address based on the first address prefix and a physical address of the router 201.

The first IPv6 address is an IPv6 address of the router 201.

In addition, in addition to generating the first IPv6 address, the router 201 may further obtain a third routing entry, the IPv6 address of the optical modem 202 from the optical modem 202, and the like based on the first address prefix. The third routing entry includes a mapping relationship between the first address prefix and a network port 103 on a local area network side of the router 201. The router 201 may configure the first IPv6 address, the first address prefix, the third routing entry, the IPv6 address of the optical modem 202, and the like.

S404: The router 201 obtains the IPv6 address of the optical modem 202.

It may be understood that the router 201 configures the obtained IPv6 address of the optical modem 202.

After S403 or S404, the method further includes the following steps:
S405: The router 201 extracts M flag from the RA packet.
S406: The router 201 determines whether the value of M flag is 1, and if yes, performs S407, or if no, performs S409.
S407: The router 201 obtains a second IPv6 address and a first domain name address from the optical modem 202 based on DHCPv6.

It should be noted that the second IPv6 address carries a second address prefix. The second IPv6 address is also an IPv6 address of the router 201. That is, when the value of A flag is 1 and the value of M flag is 1, the router 201 can not only generate the first IPv6 address by using the first address prefix and the physical address of the router 201, but also obtain the second IPv6 address from the optical modem 202 by using DHCPv6, that is, the router 201 can obtain a plurality of IPv6 addresses of the router 201.

The router 201 may store the second IPv6 address and the first domain name address that are obtained from the optical modem 202 based on DHCPv6. In addition, when obtaining the first domain name address, the router 201 may further obtain first iapd information from the optical modem 202. The first iapd information carries a third address prefix, and the third address prefix is an address prefix of an IPv6 address of a terminal device. It should be noted that, in some other scenarios, the router 201 may not obtain the first iapd information, which is not limited herein.

S408: The router 201 configures the obtained first IPv6 address, second IPv6 address, and first domain name address.

Optionally, when the router 201 obtains the first iapd information from the optical modem 202, the router 201 further configures the first iapd information.

S409: The router 201 extracts O flag from the RA packet, determines whether the value of O flag is 1, and if yes, performs S410.

S410: The router 201 obtains a second domain name address from the optical modem 202 based on DHCPv6.

In addition, when obtaining the second domain name address, the router 201 may further obtain second iapd information from the optical modem 202. The second iapd information carries a fourth address prefix, where the fourth address prefix is an address prefix of the IPv6 address of the terminal device. It should be noted that, in some other scenarios, the router 201 may not obtain the second iapd information, which is not limited herein.

It should be noted that the third address prefix and the fourth address prefix may be the same or different, which is not limited herein. When the third address prefix and the fourth address prefix are the same, the router 201 may delete any one of the two. In addition, the first domain name address and the second domain name address may be the same or different, which is not limited herein. When the first domain name address and the second domain name address are the same, the router 201 may delete any one of the two.

S411: The router 201 configures the obtained first IPv6 address and second domain name address.

In addition, when the router 201 obtains the second iapd information from the optical modem 202, the router 201 further configures the second iapd information.

For example, the router 201 may establish a communication connection to an external terminal. A first interface of a first application of the external terminal may be used to view information configured by the router 201. As shown in FIG. 5, the first interface includes the IPv6 address (that is, the first IPv6 address) "WAN IP 2004::210:20ff:fe30:4051/64" of the router 201, and the address prefix "2004:0000:0000:0000:64" of the IPv6 address of the router 201. In addition, the first interface further includes information such as the IPv6 address "fe80::20d2:ccff:fe32:d38b" of the optical modem 202 and a domain name address (that is, the second domain name address) "fe80::20d2:ccff:fe32:d38b" of a DNS server.

It should be noted that there is no sequence between S405-S408 and S409-S410. For example, S409-S410 may be performed before S405-S408, or S405-S408 and S409-S410 may be performed simultaneously.

It should be noted that the foregoing S401-S410 describe how to obtain the IPv6 address of the router 201 when the detection result is that the RA packet from the optical modem 202 is received. With reference to FIG. 6, the following describes how to obtain the IPv6 address of the router 201 when the detection result is that no RA packet from the optical modem 202 is received.

As shown in FIG. 6, another implementation procedure of S304 may further be:
S601: When the router 201 does not receive the RA packet, the router 201 obtains a second IPv6 address and a first domain name address from the optical modem 202 based on DHCPv6.

Similarly, the second IPv6 address is an IPv6 address of the router 201. That is, when the router 201 does not receive the RA packet, the router 201 cannot obtain the first address prefix from the optical modem 202. In this way, the router 201 cannot generate the first IPv6 address (the IPv6 address of the router 201). However, the router 201 may further obtain the second IPv6 address (the IPv6 address of the router 201) from the optical modem 202 by using DHCPv6.

The router 201 may configure the second IPv6 address and the first domain name address that are obtained from the optical modem 202 based on DHCPv6.

In addition, when obtaining the first domain name address, the router 201 may further obtain first iapd information from the optical modem 202. The first iapd information carries a third address prefix. The third address prefix is marked with a first flag, and the first flag is used to indicate that the third address prefix is to be used as the address prefix of the IPv6 address of the terminal device. In some other scenarios, the router 201 may not obtain the first iapd information, which is merely an example for description herein.

Optionally, the router 201 may further obtain a second domain name address and second iapd information from the optical modem 202 based on DHCPv6. Similarly, the second iapd information carries a fourth address prefix. The fourth address prefix is marked with a first flag, and the first flag is used to indicate that the fourth address prefix is to be used as the address prefix of the IPv6 address of the terminal device. In some other scenarios, the router 201 may not obtain the second iapd information, which is merely an example for description herein.

It may be understood that, when the router 201 obtains the first iapd information and the second iapd information, both the third address prefix and the fourth address prefix may be used as address prefixes of the IPv6 address of the terminal device. That is, the router 201 may obtain a plurality of address prefixes that may be used as address prefixes of the IPv6 address of the terminal device.

S602: The router 201 configures the obtained second IPv6 address and first domain name address.

Similarly, when the router 201 obtains the first iapd information and the second iapd information from the optical modem 202, the router 201 further configures the first iapd information and the second iapd information.

Similarly, when the router 201 establishes a communication connection to an external terminal, a first interface of a first application of the external terminal may be used to view information configured by the router 201. The information configured by the router 201 is similar to that in the embodiment corresponding to FIG. 6, and a difference is that content of the IPv6 addresses of the router 201 is different, and the address prefixes of the IPv6 addresses of the router 201 are different.

It should be noted that the foregoing S401-S411 and S601-S602 describe how the router 201 obtains the IPv6 address of the router 201. The following uses an example in which the terminal device includes a mobile phone 204 and a notebook computer 203. With reference to S305-S315, how the router 201 delivers the address prefix of the IPv6 address of the terminal device to the terminal device is described.

S305: The notebook computer 203 and the mobile phone 204 separately establish a communication connection to the router 201.

Still as shown in FIG. 3A and FIG. 3B, the notebook computer 203 establishes a wired communication connection to the router 201 (for example, the notebook computer 203 is connected to the router 201 by using a network cable). The mobile phone 204 establishes a wireless communication connection (for example, a wifi connection) to the router 201.

S306: The router 201 determines whether iapd information is configured, and if yes, performs S307, or if no, performs S311.

S307: The router 201 extracts the address prefix of the IPv6 address of the terminal device from the configured iapd information.

For example, when the router 201 is configured with first iapd information, the router 201 extracts a third address prefix from the first iapd information. When the router 201 is configured with second iapd information, the router 201 extracts a fourth address prefix from the second iapd information. When the router 201 is configured with both the first iapd information and the second iapd information, the router 201 extracts the third address prefix from the first iapd information and extracts the fourth address prefix from the second iapd information.

It can be learned from the foregoing that both the third address prefix and the fourth address prefix may be used as address prefixes of the IPv6 address of the terminal device.

S308: The router 201 determines whether the address prefix of the IPv6 address of the terminal device in the iapd information is consistent with the first address prefix or the second address prefix, and if not, performs S309.

It may be understood that in this embodiment of this application, the address prefix of the IPv6 address of the terminal device in the iapd information is: the third address prefix or the fourth address prefix, which is inconsistent with the first address prefix or the second address prefix (that is, the address prefix of the router 201). In this case, the router 201 performs S309.

S309: The router 201 configures a first routing entry based on the address prefix of the IPv6 address of the terminal device in the iapd information, where the first routing entry includes a mapping relationship between the address prefix of the IPv6 address of the terminal device in the iapd information and a network port 103 on a local area network side of the router 201.

Specifically, the router 201 configures the first routing entry based on the third address prefix or the fourth address prefix of the terminal device in the iapd information, where the first routing entry includes the third address prefix or the fourth address prefix in the iapd information.

It should be noted that S309 may be performed by the router 201 based on a standard neighbor discovery protocol.

For example, the first routing entry may be configured in a first routing table, and the first routing table includes a mapping relationship between each address prefix and each network port of the router 201. For example, in the first routing table, an address prefix of an IPv6 address of a device in a wide area network is corresponding to a network port 101 on a wide area network side. For example, an address prefix of an IPv6 address of a device in a local area network is corresponding to a network port 103 on a local area network side. It may be understood that address prefixes of IPv6 addresses of all devices in the wide area network may be the same, and address prefixes of IPv6 addresses of all devices in the local area network may also be the same. In this way, a data amount in the first routing table is relatively small, which saves storage space and also subsequently improves efficiency of determining a network port based on the first routing table.

S310: The router 201 sends the extracted address prefix of the IPv6 address of the terminal device to the notebook computer 203 and the mobile phone 204.

There may be no sequence between S309 and S310.

For example, when the router 201 is configured with the first iapd information, the router 201 separately sends the third address prefix to the notebook computer 203 and the mobile phone 204. When the router 201 is configured with the second iapd information, the router 201 separately sends the fourth address prefix to the notebook computer 203 and the mobile phone 204. When the router 201 is configured with both the first iapd information and the second iapd information, the router 201 sends the third address prefix and the fourth address prefix to the notebook computer 203, and sends the third address prefix and the fourth address prefix to the mobile phone 204.

It should be noted that, after receiving the third address prefix, the mobile phone 204 may generate one IPv6 address of the mobile phone 204 based on the third address prefix and a physical address of the mobile phone 204. If further receiving the fourth address prefix, the mobile phone 204 may further generate one IPv6 address of the mobile phone 204 based on the fourth address prefix and the physical address of the mobile phone 204. The mobile phone 204 sends, to the router 201, the physical address of the mobile phone 204 and the IPv6 address of the mobile phone 204 for which a mapping relationship is established. The router 201 further configures the physical address of the mobile phone 204 and the IPv6 address of the mobile phone 204 for which a mapping relationship is established.

Similarly, after receiving the third address prefix, the notebook computer 203 may generate one IPv6 address of the notebook computer 203 based on the third address prefix and a physical address of the notebook computer 203. If further receiving the fourth address prefix, the notebook computer 203 may further generate one IPv6 address of the notebook computer 203 based on the fourth address prefix and the physical address of the notebook computer 203. The notebook computer 203 sends, to the router 201, the physical address of the notebook computer 203 and the IPv6 address of the notebook computer 203 for which a mapping relationship is established. The router 201 further configures the physical address of the notebook computer 203 and the IPv6 address of the notebook computer 203 for which a mapping relationship is established.

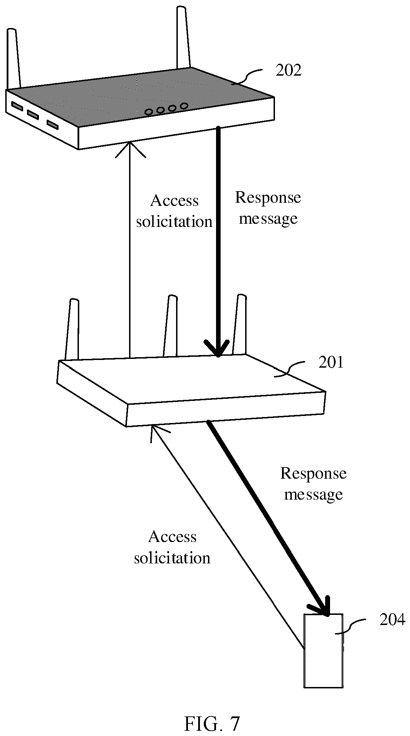

As shown in FIG. 7, when the mobile phone 204 needs to access the Internet, the mobile phone 204 may send an access solicitation to the router 201, where the access solicitation carries an IPv6 address of the mobile phone 204 (when the mobile phone 204 is configured with a plurality of IPv6 addresses, the IPv6 address carried in the access solicitation is one randomly selected from the plurality of IPv6 addresses). The router 201 may send the access solicitation to the optical modem 202, where the access solicitation carries the IPv6 address of the router 201 and the IPv6 address of the mobile phone 204. The optical modem 202 may send the access solicitation to the wide area network. Further, the wide area network feeds back a response message to the optical modem 202 based on the access solicitation, and the response message also carries the IPv6 address of the mobile phone 204. The optical modem 202 sends the response message to the router 201 based on the IPv6 address of the router 201. The router 201 finds the physical address of the mobile phone 204 based on the IPv6 address of the mobile phone 204. The router 201 determines, in the first routing table based on the third address prefix or the fourth address prefix in the IPv6 address of the mobile phone 204, that the network port is the network port 103 on the local area network side. Further, the router 201 sends the response message to the mobile phone 204 based on the physical address of the mobile phone 204 and the IPv6 address of the mobile phone 204 by using the network port 103 on the local area network side. In this way, the mobile phone 204 completes an Internet access process.

S311: The router 201 determines whether an RA packet is stored, and whether a stored RA packet carries the first address prefix, and if yes, performs S312-S315, or if no, performs S316-S319.

S312: The router 201 copies the first address prefix.

In this case, the first address prefix copied by the router 201 may be used as an address prefix of the terminal device.

S313: The router 201 separately sends the first address prefix to the notebook computer 203 and the mobile phone 204.

It should be noted that after receiving the first address prefix, the mobile phone 204 may generate the IPv6 address of the mobile phone 204 based on the first address prefix and the physical address of the mobile phone 204. The mobile phone 204 sends, to the router 201, the physical address of the mobile phone 204 and the IPv6 address of the mobile phone 204 for which a mapping relationship is established. The router 201 further configures the physical address of the mobile phone 204 and the IPv6 address of the mobile phone 204 for which a mapping relationship is established.

S314: The router 201 receives the IPv6 address of the mobile phone 204 from the mobile phone 204, and receives the IPv6 address of the notebook computer 203 from the notebook computer 203.

Similarly, after receiving the first address prefix, the notebook computer 203 may generate one IPv6 address of the notebook computer 203 based on the third address prefix and the physical address of the notebook computer 203. The notebook computer 203 sends, to the router 201, the physical address of the notebook computer 203 and the IPv6 address of the notebook computer 203 for which a mapping relationship is established. The router 201 further configures the physical address of the notebook computer 203 and the IPv6 address of the notebook computer 203 for which a mapping relationship is established.

S315: The router 201 configures a second routing entry based on the IPv6 address of the notebook computer 203 and the IPv6 address of the mobile phone 204, where the second routing entry includes a mapping relationship respectively between the IPv6 address of the mobile phone 204 and the IPv6 address of the notebook computer 203, and the network port 103 on the local area network side of the router 201.

It should be noted that S315 may be performed by the router 201 based on a neighbor discovery proxy module configured on the router 201.

For example, the second routing entry may be configured in a second routing table, and the second routing table includes a mapping relationship between each IPv6 address and each network port of the router 201. For example, in the second routing table, an address prefix of an IPv6 address of a device in a wide area network is corresponding to a network port 101 on a wide area network side. For another example, an address prefix of an IPv6 address of a device in a local area network is corresponding to a network port 103 on a local area network side.

It may be understood that, in S315, the address prefix of the IPv6 address of the router 201 is the same as the address prefix of the IPv6 address of the terminal device. To prevent occurrence of disorder in a case of determining a network port for receiving and sending a message when the router 201 determines to receive and send information, thereby causing a failure of receiving and sending a message, the router 201 no longer establishes a mapping relationship (that is, no longer uses a first routing entry) between each address prefix and each network port, but establishes a mapping relationship (that is, uses the second routing entry) between an IPv6 address of each device and each network port, so that the router 201 can accurately determine a network port used for receiving and sending information.

S316: The router 201 copies the second address prefix from the second IPv6 address obtained based on DHCPv6.

In this case, the second address prefix copied by the router 201 may be used as an address prefix of the terminal device.

S317: The router 201 separately sends the second address prefix to the notebook computer 203 and the mobile phone 204.

It should be noted that after receiving the second address prefix, the mobile phone 204 may generate the IPv6 address of the mobile phone 204 based on the second address prefix and the physical address of the mobile phone 204. The mobile phone 204 sends, to the router 201, the physical address of the mobile phone 204 and the IPv6 address of the mobile phone 204 for which a mapping relationship is established. The router 201 further configures the physical address of the mobile phone 204 and the IPv6 address of the mobile phone 204 for which a mapping relationship is established.

Similarly, after receiving the second address prefix, the notebook computer 203 may generate one IPv6 address of the notebook computer 203 based on the second address prefix and the physical address of the notebook computer 203. The notebook computer 203 sends, to the router 201, the physical address of the notebook computer 203 and the IPv6 address of the notebook computer 203 for which a mapping relationship is established. The router 201 further configures the physical address of the notebook computer 203 and the IPv6 address of the notebook computer 203 for which a mapping relationship is established.

S318: The router 201 receives the IPv6 address of the mobile phone 204 from the mobile phone 204, and receives the IPv6 address of the notebook computer 203 from the notebook computer 203.

S319: The router 201 configures a second routing entry based on the IPv6 address of the notebook computer 203 and the IPv6 address of the mobile phone 204.

The second routing entry includes a mapping relationship respectively between the IPv6 address of the mobile phone 204 and the IPv6 address of the notebook computer 203, and the network port 103 on the local area network side of the router 201. It may be understood that content of the second routing entry in S319 is similar to content of the second routing entry in the foregoing S315, and details are not described herein again.

It should be noted that in some other embodiments, the router 201 may also perform both S312-S315 and S316-S319. In this case, the mobile phone 204 and the notebook computer 203 may separately generate two IPv6 addresses.

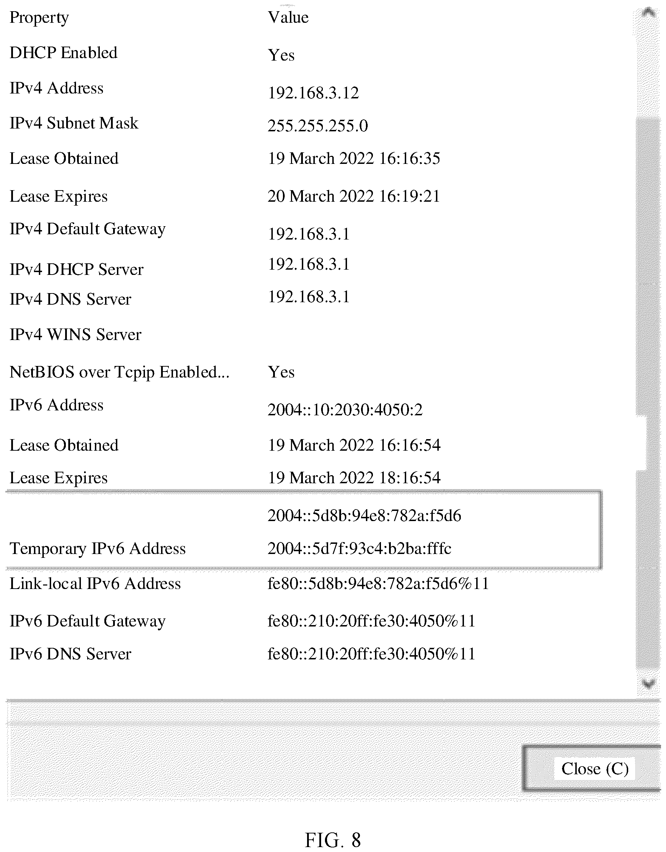

For example, the terminal device is the mobile phone 204. The mobile phone 204 may display, on a second interface of a second application, Internet access information configured on the mobile phone 204. As shown in FIG. 8, when two IPv6 addresses are configured on the mobile phone 204, the second interface of the second application of the mobile phone 204 includes the two IPv6 addresses of the mobile phone 204, one IPv6 address of the mobile phones 204 is "2004::5d8b:94e8:782a:f5d6", and the other IPv6 address of the mobile phone 204 is "2004::5d7f:93c4:b2ba:fffc". "2004::" in the two IPv6 addresses is the first address prefix or the second address prefix from the router 201.

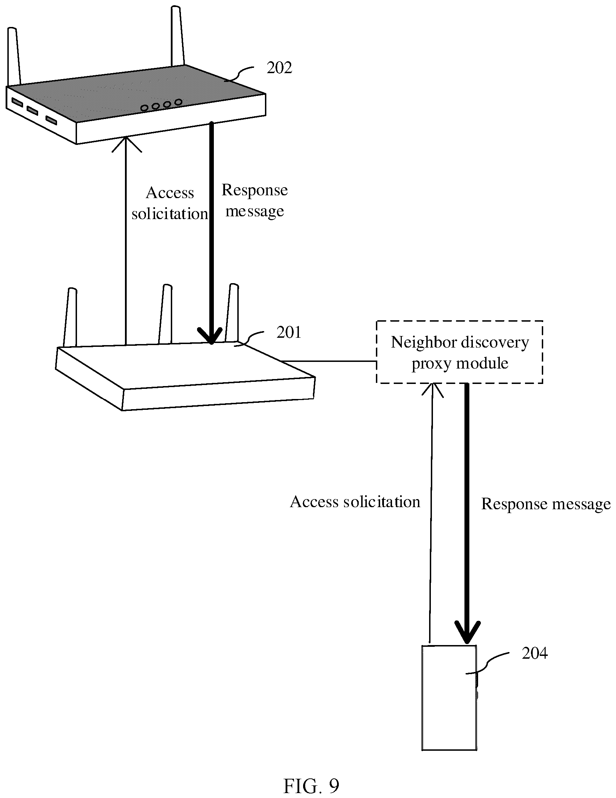

Further, as shown in FIG. 9, when the mobile phone 204 needs to access the Internet, the mobile phone 204 may send an access solicitation to the router 201, where the access solicitation carries an IPv6 address of the mobile phone 204 (when the mobile phone 204 is configured with a plurality of IPv6 addresses, the IPv6 address carried in the access solicitation is one randomly selected from the plurality of IPv6 addresses). The router 201 may send the access solicitation to the optical modem 202, where the access carries the IPv6 address of the router 201 and the IPv6 address of the mobile phone 204. The optical modem 202 may send the access solicitation to the wide area network. Further, the wide area network feeds back a response message to the optical modem 202 based on the access solicitation, and the response message also carries the IPv6 address of the mobile phone 204. The optical modem 202 sends the response message to the router 201 based on the IPv6 address of the router 201. Based on the IPv6 address of the mobile phone 204, the router 201 determines, in the second routing table by using the neighbor discovery proxy module, that a network port used by the router 201 for communication and interaction is the network port 103 on the local area network side. Further, the router 201 sends the response message to the mobile phone 204 based on the physical address of the mobile phone 204 and the IPv6 address of the mobile phone 204 by using the network port 103 on the local area network side. In this way, the mobile phone 204 completes an Internet access process.

In addition, a principle of a process of accessing the Internet by the notebook computer 203 is similar to that of a process of accessing the Internet by the mobile phone 204, and details are not described herein again.

In conclusion, in the address configuration method provided in the embodiment of this application, when the optical modem 202 does not allocate the address prefix of the IPv6 address of the terminal device to the router 201, that is, when the first iapd information and the second iapd information are not configured on the router 201, the router 201 may further copy the first address prefix of the IPv6 address of the router 201, and/or extract the second address prefix from the second IPv6 address obtained based on DHCPv6, and send the second address prefix to the terminal device. The terminal device may generate the IPv6 address of the terminal device based on the first address prefix and the physical address of the terminal device; and/or the terminal device may also generate the IPv6 address of the terminal device based on the second address prefix and the physical address of the terminal device. In this way, the terminal device can still generate the IPv6 address of the terminal device even if the optical modem 202 does not allocate the address prefix of the IPv6 address of the terminal device to the router 201. Further, the terminal device can normally access the Internet based on the IPv6 address of the terminal device.

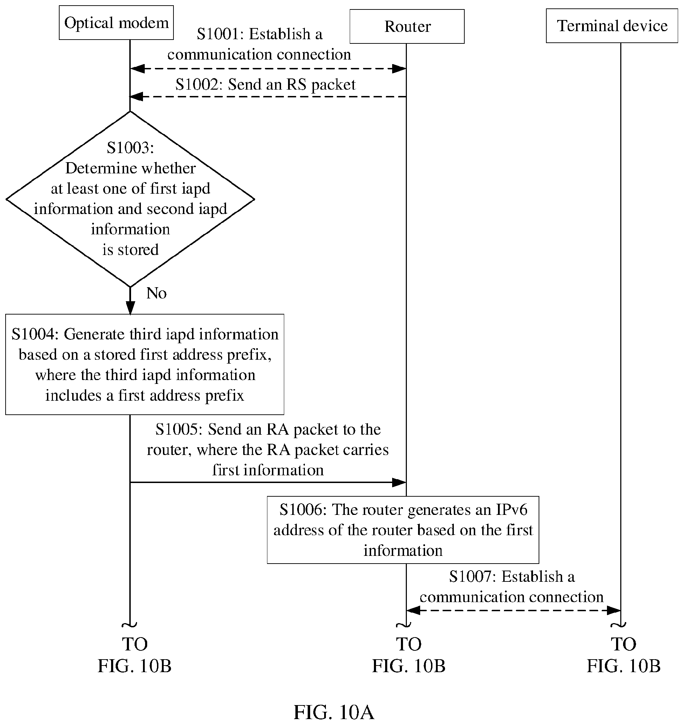

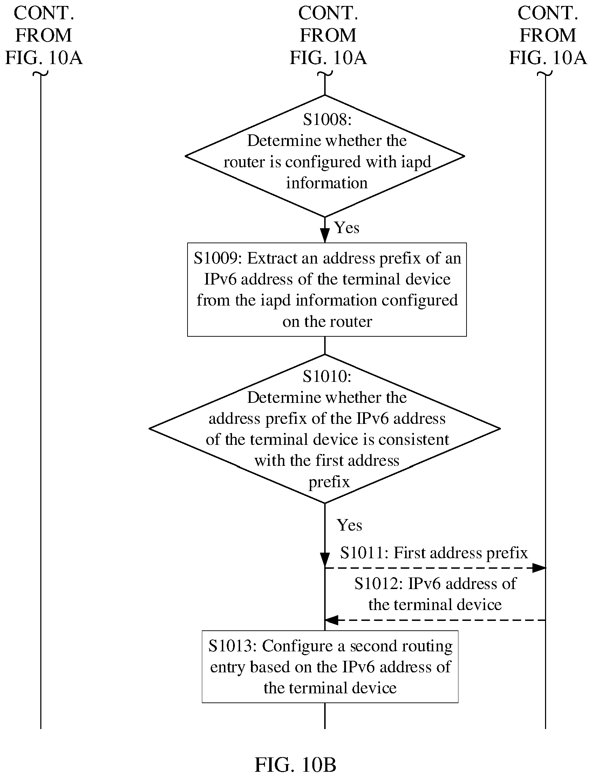

It should be noted that, the foregoing embodiment describes how the terminal device configures the IPv6 address when the router 201 determines that at least one of the first iapd information and the second iapd information is configured, and the address prefix of the IPv6 address of the terminal device is inconsistent with the first address prefix or the second address prefix; or how the mobile phone 204 configures the IPv6 address when the router 201 determines that at least one of the first iapd information and the second iapd information is not configured (that is, the router 201 generates the address prefix of the terminal device). With reference to FIG. 10A and FIG. 10B, the following describes how the terminal device configures the IPv6 address when the router 201 determines that at least one of the first iapd information and the second iapd information is configured, and the address prefix of the IPv6 address of the terminal device is consistent with the first address prefix or the second address prefix (that is, the optical modem 202 generates the address prefix of the terminal device). As shown in FIG. 10A and FIG. 10B, an address configuration method provided in another embodiment of this application includes:
S 1001: An optical modem 202 establishes a local area network connection to a router 201.
S1002: The optical modem 202 receives a router solicitation RS (Router Solicitation) packet (that is, a first solicitation) from the router 201. The RS packet is used to request first information, and the first information includes information used to generate an IPv6 address of the router 201.

Similar to the foregoing embodiment, the first information may include a first address prefix, an autonomous flag (that is, Autonomous flag, A flag for short), a managed flag (that is, Managed flag, M flag), and other flag (that is, Other flag, O flag for short). In this case, the first address prefix carried in the first information is used as an address prefix of the router 201.

S 1003: The optical modem 202 determines whether at least one of first iapd information and second iapd information is stored, and if no, performs S 1004.

S 1004: The optical modem 202 generates third iapd information based on the stored first address prefix. The third iapd information includes the first address prefix.

The first address prefix carried in the third iapd information is used as an address prefix of an IPv6 address of a terminal device.

S1005: The optical modem 202 sends a router advertisement (Router Advertisement, RA) packet to the router 201. The RA packet carries the first information.

S1006: The router 201 generates an IPv6 address of the router 201 based on the first information.

For details of a manner in which the router 201 generates the IPv6 address of the router 201 based on the first information, refer to descriptions of the embodiments respectively corresponding to FIG. 4 and FIG. 6 in the foregoing S306. Details are not described herein again.

In the embodiment corresponding to FIG. 4 or FIG. 6, the router 201 obtains the first iapd information and the second iapd information from the optical modem 202 based on DHCPv6, the first iapd information carries the third address prefix different from the first address prefix, and the second iapd information carries the fourth address prefix different from the first address prefix. Different from the embodiments respectively corresponding to FIG. 4 and FIG. 6, in this embodiment, the router 201 obtains the third iapd information from the optical modem 202 based on DHCPv6, and the third iapd information carries the first address prefix. In this case, the router 201 is configured with the IPv6 address of the router 201 and the third iapd information.

S1007: A notebook computer 203 and a mobile phone 204 separately establish a communication connection to the router 201.

S1008: The router 201 determines whether iapd information is configured, and if yes, performs S1009.

51009: The router 201 extracts the address prefix of the IPv6 address of the terminal device from the configured iapd information.

S1010: The router 201 determines whether the address prefix of the IPv6 address of the terminal device is consistent with the first address prefix, and if yes, performs S1011.

It may be understood that in this embodiment of this application, if the router 201 is configured with the third iapd information, the extracted address prefix of the IPv6 address of the terminal device is the first address prefix carried in the third iapd information.

S1011: The router 201 separately sends the first address prefix to the notebook computer 203 and the mobile phone 204.

It may be understood that because the third iapd information carries the first address prefix, the extracted address prefix of the IPv6 address of the terminal device is the first address prefix.

It should be noted that after receiving the first address prefix, the mobile phone 204 may generate the IPv6 address of the mobile phone 204 based on the first address prefix and a physical address of the mobile phone 204. Similarly, after receiving the first address prefix, the notebook computer 203 may generate one IPv6 address of the notebook computer 203 based on the third address prefix and the physical address of the notebook computer 203.

S1012: The router 201 receives the IPv6 address of the mobile phone 204 from the mobile phone 204, and receives the IPv6 address of the notebook computer 203 from the notebook computer 203.

S1013: The router 201 configures a second routing entry based on the IPv6 address of the notebook computer 203 and the IPv6 address of the mobile phone 204, where the second routing entry includes a mapping relationship respectively between the IPv6 address of the mobile phone 204 and the IPv6 address of the notebook computer 203, and the network port 103 on the local area network side of the router 201.

Content of the second routing entry in S 1013 is similar to content of the second routing entry in the foregoing S315, and details are not described herein again.

It should be noted that in the embodiment corresponding to FIG. 10A and FIG. 10B, a process of accessing the Internet by the mobile phone 204 or the notebook computer 203 is the same as a process in the foregoing embodiment corresponding to FIG. 9, and details are not described herein again.

In conclusion, according to the address configuration method provided in the embodiment corresponding to FIG. 10A and FIG. 10B, when the optical modem 202 is not configured with the first iapd information or the second iapd information that carries the address prefix of the IPv6 address of the terminal device, the third iapd information that carries the address prefix (the first address prefix) of the IPv6 address of the terminal device may be generated. In this case, the address prefix of the IPv6 address of the router 201 is the same as the address prefix of the IPv6 address of the terminal device. To prevent occurrence of disorder in a case of determining a network port for receiving and sending a message when the router 201 determines to receive and send information, thereby causing a failure of receiving and sending a message, the router 201 no longer establishes a mapping relationship (that is, no longer uses a first routing entry) between each address prefix and each network port, but establishes a mapping relationship (that is, uses the second routing entry) between an IPv6 address of each device and each network port, so that the router 201 can accurately determine a network port used for receiving and sending information. In this way, the terminal device can still generate the IPv6 address of the terminal device even if the optical modem 202 is not configured with the first iapd information or the second iapd information that carries the address prefix of the IPv6 address of the terminal device. Further, the terminal device can normally access the Internet based on the IPv6 address of the terminal device.

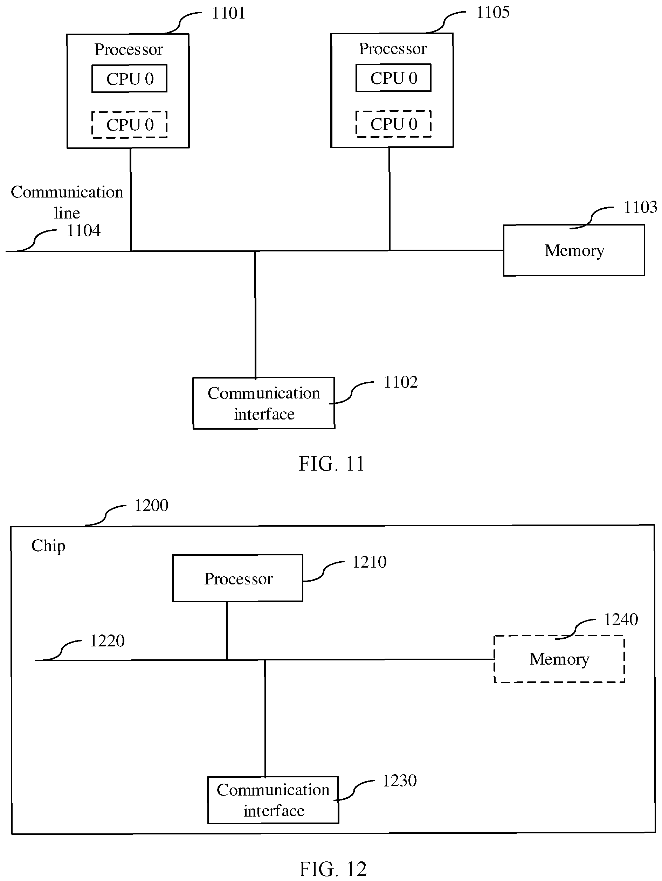

For example, FIG. 11 is a schematic diagram of a hardware structure of an electronic device according to an embodiment of this application. As shown in FIG. 11, the electronic device includes a processor 1101, a communication line 1104, and at least one communication interface (in FIG. 11, a communication interface 1103 is used as an example for description).

The processor 1101 may be a general-purpose central processing unit (central processing unit, CPU), a microprocessor, an application-specific integrated circuit (application-specific integrated circuit, ASIC), or one or more integrated circuits for controlling program execution in the solutions in this application.

The communication line 1104 may include a circuit for transmitting information among the foregoing components.

The communication interface 1103 uses any apparatus such as a transceiver and is configured to communicate with another device or a communication network, such as an Ethernet or a wireless local area network (wireless local area network, WLAN).

Possibly, the electronic device may further include a memory 1102.

The memory 1102 may be a read-only memory (read-only memory, ROM) or another type of static storage device capable of storing static information and instructions, a random access memory (random access memory, RAM) or another type of dynamic storage device capable of storing information and instructions, or an electrically erasable programmable read-only memory (electrically erasable programmable read-only memory, EEPROM), a compact disc read-only memory (compact disc read-only memory, CD-ROM) or another optical disc memory, a compact disc memory (including a compact disc, a laser disc, an optical disc, a digital versatile disc, a Blu-ray disc, and the like), a magnetic disk storage medium or another magnetic storage device, or any other medium that can be used to carry or store desired program code in the form of instructions or data structures and that can be accessed by a computer, but is not limited thereto. The memory may exist independently, and is connected to the processor by using the communication line 1104. The memory may alternatively be integrated with the processor.

The memory 1102 is configured to store computer-executable instructions for performing the solution in this application, and the processor 1101 controls execution. The processor 1101 is configured to execute the computer-executable instructions stored in the memory 1102. When the electronic device is a router, the processor 1101 may perform the address configuration method provided in the embodiment corresponding to FIG. 3A and FIG. 3B in the embodiments of this application. When the electronic device is an optical modem, the processor 1101 may perform the address configuration method provided in the embodiment corresponding to FIG. 10A and FIG. 10B in the embodiments of this application.

Possibly, the computer-executable instructions in this embodiment of this application may also be referred to as application program code. This is not specifically limited in the embodiments of this application.

During specific implementation, in an embodiment, the processor 1101 may include one or more CPUs, such as a CPU 0 and a CPU 1 in FIG. 11.

During specific implementation, in an embodiment, the electronic device may include a plurality of processors, for example, the processor 1101 and a processor 1105 in FIG. 11. Each of these processors may be a single-core (single-CPU) processor or a multi-core (multi-CPU) processor. The processor herein may be one or more devices, circuits, and/or processing cores configured to process data (for example, computer program instructions).

For example, FIG. 12 is a schematic diagram of a structure of a chip according to an embodiment of this application. A chip 120 includes one or more than two (including two) processors 1210 and a communication interface 1230.

In some implementations, a memory 1240 stores the following elements: an executable module or a data structure, or subsets thereof, or extended sets thereof.

In this embodiment of this application, the memory 1240 may include a read-only memory and a random access memory, and provide instructions and data to the processor 1210. A part of the memory 1240 may further include a non-volatile random access memory (non-volatile random access memory, NVRAM).

In this embodiment of this application, the processor 1210, the communication interface 1230, and the memory 1240 are coupled together by using a bus system 1220. The bus system 1220 may further include a power bus, a control bus, and a status signal bus in addition to a data bus. For convenience of description, various buses are marked as the bus system 1220 in FIG. 12.

The address configuration method provided in the embodiment corresponding to FIG. 3A and FIG. 3B or the address configuration method provided in the embodiment corresponding to FIG. 10A and FIG. 10B described in the foregoing embodiments of this application may be applied to the processor 1210, or implemented by the processor 1210. The processor 1210 may be an integrated circuit chip having a capability of processing a signal. In an implementation process, steps of the address configuration method provided in the embodiment corresponding to FIG. 3A and FIG. 3B or steps of the address configuration method provided in the embodiment corresponding to FIG. 10A and FIG. 10B may be completed by using an integrated logic circuit of hardware or instructions in a form of software in the processor 1210. The processor 1210 may be a general-purpose processor (such as a microprocessor or a conventional processor), a digital signal processor (digital signal processor, DSP), an application-specific integrated circuit (application-specific integrated circuit, ASIC), a field-programmable gate array (field-programmable gate array, FPGA), or another programmable logic device, a discrete gate, a transistor logic device, or a discrete hardware component. When the electronic device is a router, the processor 1210 may perform the address configuration method provided in the embodiment corresponding to FIG. 3A and FIG. 3B in the embodiments of this application. When the electronic device is an optical modem, the processor 1210 may perform the address configuration method provided in the embodiment corresponding to FIG. 10A and FIG. 10B in the embodiments of this application.

The steps of the method disclosed in the embodiments of this application may be directly performed by a hardware decoding processor, or performed by a combination of hardware and a software module in a decoding processor. The software module may be located in a mature storage medium in the art, such as a random access memory, a read-only memory, a programmable read only memory, or an electrically erasable programmable read only memory (electrically erasable programmable read only memory, EEPROM). The storage medium is located in the memory 1240. The processor 1210 reads information in the memory 1240, and with reference to hardware of the processor 1210, when the electronic device is a router, the processor 1210 may perform the address configuration method provided in the embodiment corresponding to FIG. 3A and FIG. 3B in the embodiments of this application. When the electronic device is an optical modem, the processor 1210 may perform the address configuration method provided in the embodiment corresponding to FIG. 10A and FIG. 10B in the embodiments of this application.

In the foregoing embodiments, the instructions stored in the memory for execution by the processor may be implemented in a form of a computer program product. The computer program product may be written in the memory in advance, or may be downloaded and installed in the memory in a form of software.

The computer program product includes one or more computer instructions. When the computer program instructions are loaded and executed on a computer, all or some of the procedures or functions according to embodiments of this application are generated. The computer may be a general-purpose computer, a special-purpose computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any available medium that the computer can store, or a data storage device such as a server or a data center integrating one or more available media. For example, the available medium may include a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

An embodiment of this application further provides a computer-readable storage medium. The address configuration method provided in the embodiment corresponding to FIG. 3A and FIG. 3B or the address configuration method provided in the embodiment corresponding to FIG. 10A and FIG. 10B described in the foregoing embodiments may be implemented in whole or in part by using software, hardware, firmware, or any combination thereof. The computer-readable medium may include a computer storage medium and a communication medium, and may further include any medium that enables a computer program to be transmitted from one place to another place. The storage medium may be any target medium accessible by the computer.

In a possible design, the computer-readable medium may include a compact disc read-only memory (compact disc read-only memory, CD-ROM), a RAM, a ROM, an EEPROM, or another optical disc memory; or the computer-readable medium may include a magnetic disk memory or another magnetic disk storage device. In addition, any connecting line may also be appropriately referred to as a computer-readable medium. For example, if software is transmitted from a website, a server, or another remote source by using a coaxial cable, an optical fiber cable, a twisted pair, a DSL, or wireless technologies (for example, infrared, radio, and microwave), the coaxial cable, the optical fiber cable, the twisted pair, the DSL, or the wireless technologies such as infrared, radio, and microwave are included in the definition of the medium. A magnetic disk and an optical disc used herein include a compact disc (CD), a laser disc, a digital versatile disc (digital versatile disc, DVD), a floppy disk, and a blue ray disc. The magnetic disk generally reproduces data in a magnetic manner, and the optical disc reproduces data optically by using laser.

The foregoing combinations should also be included in the scope of the computer-readable medium. The foregoing descriptions are merely specific implementations of this application, but are not intended to limit the protection scope of this application. Any change or replacement readily figured out by a person skilled in the art within the technical scope disclosed in this application shall fall within the protection scope of this application. Therefore, the protection scope of this application shall be subject to the protection scope of the claims.

## Claims

1. An address configuration method, wherein the method comprises:
obtaining, by a router, first information from an optical modem, wherein the first information is information used to generate an IPv6 address of the router;
configuring, by the router, the IPv6 address of the router based on the first information;
obtaining, by the router, an IPv6 address prefix of a terminal device based on the first information, wherein an address prefix of an IPv6 address of the terminal device is the same as an address prefix of the IPv6 address of the router;
sending, by the router, the address prefix of the terminal device to the terminal device; and
configuring, by the terminal device, the IPv6 address of the terminal device based on the address prefix of the terminal device.

2. The method according to claim 1, wherein the first information is carried in an RA packet sent by the optical modem in response to an RS packet of the router, and the configuring, by the router, the IPv6 address of the router based on the first information comprises:
when the router obtains the first information, extracting, from the first information, a first address prefix and a first flag used to indicate whether to configure a stateless IP address;
when the first flag is used to indicate to configure a stateless IP address, generating, by the router, a first IPv6 address based on the first address prefix and a physical address of the router, wherein the first IPv6 address is an IPv6 address of the router; and
configuring, by the router, the first IPv6 address.

3. The method according to claim 2, wherein the obtaining, by the router, an IPv6 address prefix of a terminal device based on the first information comprises:
copying, by the router, the first address prefix when the first information comprises the first address prefix, wherein the first address prefix is reused as the address prefix of the terminal device.

4. The method according to any one of claims 1-3, wherein the first information is carried in an RA packet sent by the optical modem in response to an RS packet of the router, and the configuring, by the router, the IPv6 address of the router based on the first information comprises:
when the router obtains the first information, extracting a second flag from the first information, wherein the second flag is used to indicate whether to configure a stateful IP address;
when the second flag is used to indicate to configure a stateful IP address, obtaining, by the router, a second IPv6 address from the optical modem based on Dynamic Host Configuration Protocol Version 6 DHCPv6, wherein the second IPv6 address is an IPv6 address of the router; and
configuring, by the router, the second IPv6 address.

5. The method according to claim 1, wherein the obtaining, by a router, first information from an optical modem comprises:
sending, by the router, an RS packet to the optical modem;
when the router determines that no RA packet from the optical modem is received, obtaining, by the router, the first information from the optical modem based on DHCPv6, wherein the first information comprises a second IPv6 address, and the second IPv6 address is an IPv6 address of the router; and
the configuring, by the router, the IPv6 address of the router based on the first information comprises: configuring, by the router, the second IPv6 address.

6. The method according to claim 4 or 5, wherein the obtaining, by the router, an IPv6 address prefix of a terminal device based on the first information comprises:
copying, by the router, a second address prefix from the second IPv6 address obtained based on the first information, wherein the second address prefix is reused as the address prefix of the terminal device.

7. The method according to any one of claims 1-6, wherein after the configuring, by the terminal device, the IPv6 address of the terminal device based on the address prefix of the terminal device, the method further comprises:
receiving, by the router, the IPv6 address of the terminal device from the terminal device; and
configuring, by the router, a second routing entry based on the IPv6 address of the terminal device, wherein the second routing entry comprises a mapping relationship between the IPv6 address of the terminal device and a network port on a local area network side of the router.

8. An address configuration method, wherein the method comprises:
receiving, by an optical modem, an RS packet of a router, wherein the RS packet is used to request first information, the first information comprises information used to generate an IPv6 address of the router, and the first information comprises a first address prefix and a first flag used to indicate whether to configure a stateless IP address;
when the optical modem does not store an authorized prefix flag, generating, by the optical modem, the authorized prefix flag based on the first address prefix, wherein the authorized prefix flag is associated with an IPv6 address of a terminal device;
sending, by the optical modem, the first information to the router;
when the first flag is used to indicate to configure a stateless IP address, generating, by the router, a first IPv6 address based on the first address prefix and a physical address of the router, wherein the first IPv6 address is an IPv6 address of the router;
obtaining, by the router, the authorized prefix flag from the optical modem;
extracting, by the router, the first address prefix from the authorized prefix flag;
sending, by the router, the first address prefix to the terminal device; and
configuring, by the terminal device, the IPv6 address of the terminal device based on the first address prefix.

9. The method according to claim 8, wherein the obtaining, by the router, the authorized prefix flag from the optical modem based on DHCPv6 comprises:
extracting, by the router from the first information, a second flag used to indicate whether to configure a stateful IP address; and
when the second flag is used to indicate to configure a stateful IP address, obtaining, by the router, a second IPv6 address and the authorized prefix flag from the optical modem based on DHCPv6, wherein the second IPv6 address is an IPv6 address of the router.

10. The method according to claim 8, wherein the obtaining, by the router, the authorized prefix flag from the optical modem based on DHCPv6 comprises:
extracting, by the router from the first information, a second flag used to indicate whether to configure a stateful IP address;
when the second flag is used to indicate that no stateful IP address is configured, extracting, by the router from the first information, a third flag used to indicate whether to obtain another parameter different from a stateful IP address by using DHCPv6; and
when the third flag is used to indicate to obtain another parameter different from the stateful IP address by using DHCPv6, obtaining, by the router, the authorized prefix flag from the optical modem based on DHCPv6.

11. The method according to any one of claims 8-10, wherein after the configuring, by the terminal device, the IPv6 address of the terminal device based on the first address prefix, the method further comprises:
receiving, by the router, the IPv6 address of the terminal device from the terminal device; and
configuring, by the router, a second routing entry based on the IPv6 address of the terminal device, wherein the second routing entry comprises a mapping relationship between the IPv6 address of the terminal device and a network port on a local area network side of the router.

12. An electronic device, comprising a memory, a processor, and a computer program that is stored in the memory and that is capable of running on the processor, wherein when the processor executes the computer program, the electronic device is enabled to perform the method performed by the router according to any one of claims 1 to 7, or the method performed by the optical modem according to any one of claims 8 to 11.

13. A computer-readable storage medium, wherein the computer-readable storage medium stores a computer program, and when the computer program is executed by a processor, a computer is enabled to perform the method performed by the router according to any one of claims 1 to 7, or the method performed by the optical modem according to any one of claims 8 to 11.

14. A computer program product, comprising a computer program, wherein when the computer program is run, a computer is enabled to perform the method performed by the router according to any one of claims 1 to 7, or the method performed by the optical modem according to any one of claims 8 to 11.
